# EUROPEAN PATENT SPECIFICATION

(11) **EP 3 650 293 B1**
(45) Date of publication and mention of the grant of the patent: **11.08.2021**
(21) Application number: 19207092.8
(22) Date of filing: 05.11.2019
(51) Int. Cl.: B60T 7/20, B60T 15/20, B60D 1/64

(54) **DEVICE FOR CONTROLLING THE BRAKING OF A TRAILER**
VORRICHTUNG ZUR STEUERUNG DER BREMSUNG EINES ANHÄNGERS
DISPOSITIF DE CONTRÔLE DU FREINAGE D'UNE REMORQUE

(30) Priority: 06.11.2018 IT 201800010083
(43) Date of publication of application: 13.05.2020
(73) Proprietor: SAFIM S.r.l., 41123 Modena (MO) (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- EP-A1- 2 934 962
- EP-A1- 2 952 398
- EP-A1- 3 000 631
- WO-A1-2017/072672

## Description

The present invention relates to a device for controlling the braking of a trailer. Patent documents EP 3 000 631 A1, WO 2017/072672 A1, EP 2 934 962 A1 and EP 2 952 398 A1 disclose relevant state of the art devices for controlling the braking of a trailer.

It is well known that in the case of a trailer towed by a tractor, the braking systems thereof are operationally connected in such a way that the braking of the tractor actuated by the operator also causes the braking of the towed trailer. The braking system of the trailer is then controlled by the braking system of the tractor in order to synchronize the braking forces acting on these.

Therefore, when the operator actuates the tractor's brake pedal, they intervene on the tractor's wheels and, by means of a braking valve (called a brake-trailer valve), also on the trailer's braking system.

As is well known, today's towing vehicles are connected to their trailer by means of a connecting device comprising a pair of male joints adapted to be inserted into a pair of relative female joints associated with the trailer.

In particular, the female joints can be connected to a control line adapted to supply the trailer's braking system, and to an additional line respectively, adapted to deactivate the emergency and/or parking brake of the trailer itself. Under emergency situations, the additional line must be properly connected to the tank of the towing vehicle so as to allow the activation of the emergency and/or parking brake of the trailer and, therefore, the braking of the same.

Then there are valve means placed inside the relative joint which are adapted to connect, in case of detachment of the trailer from the towing vehicle, the additional line with the discharge line so that the fluid under pressure that keeps the emergency and/or parking brake deactivated or the type of a spring brake with hydraulic release (called SAHR), is discharged into the collection tank thus allowing the spring to expand and to activate the automatic and/or parking braking.

Known connecting devices do however have some drawbacks.

It may be necessary to move the trailer even after it has been disconnected from the towing vehicle.

They do not allow the trailer to be moved once it is disconnected from its towing vehicle because, as described above, in this operating condition the emergency and/or parking brake is activated due to the connection of the additional line with the collection tank.

Another drawback of the known type of devices is that they do not allow towing a trailer with an old generation towing vehicle, i.e. provided with only the control line connected to the service braking system.

The main aim of the present invention is to devise a device for controlling the braking of a trailer which allows the trailer itself to be moved even when this is disconnected from its towing vehicle.

Within this aim, one object of the present invention is to devise a device which allows preventing the emergency and/or parking brake of the trailer from being incorrectly deactivated even after connection to the towing vehicle.

Another object of the present invention is to effectively signal to the user the status of the automatic and/or parking braking of the trailer.

Yet another object is to devise a device for controlling the braking of a trailer which allows a trailer to be towed also by means of old generation towing vehicles, i.e. vehicles of the single-line type.

Another object of the present invention is to devise a device for controlling the braking of a trailer which allows overcoming the aforementioned drawbacks of the prior art in the context of a simple, rational, easy, effective to use and low-cost solution.

The aforementioned objects are achieved by the present device for controlling the braking of a trailer according to claim 1.

Other characteristics and advantages of the present invention will be more evident from the description of a preferred, but not exclusive, embodiment of a device for controlling the braking of a trailer, illustrated by way of a nonlimiting example in the accompanying tables of drawing in which:
Figure 1 is a schematic representation of the braking system of a trailer comprising a device according to the invention, in a first embodiment;
Figure 2 is a schematic representation of the braking system of a trailer comprising a device according to the invention, in a second embodiment;

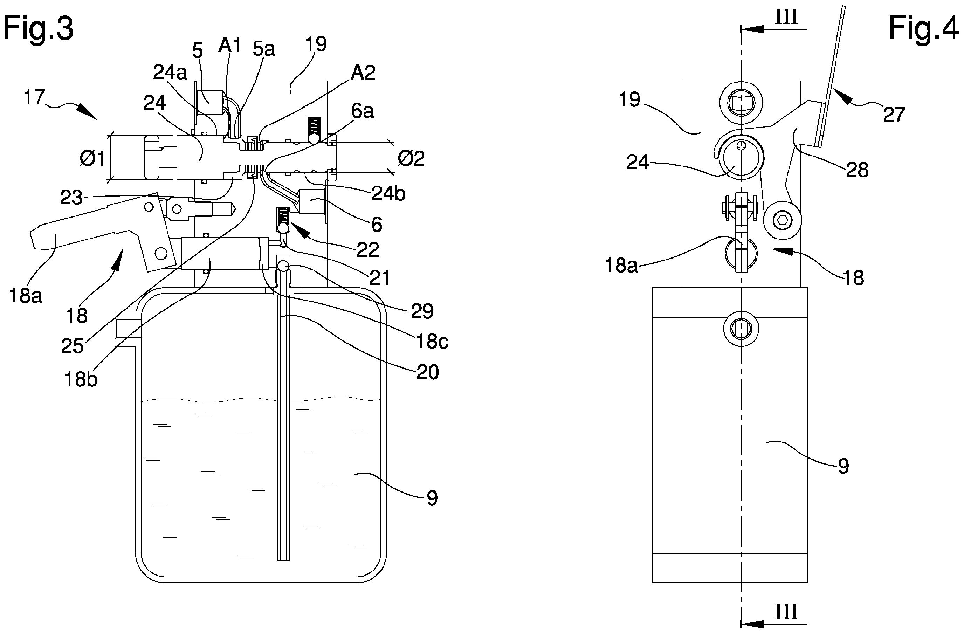

Figure 3 is a side elevation view of a device according to the invention with the spool in a braking position;
Figure 4 is a section of the device of Figure 3 according to the track plane IV-IV;

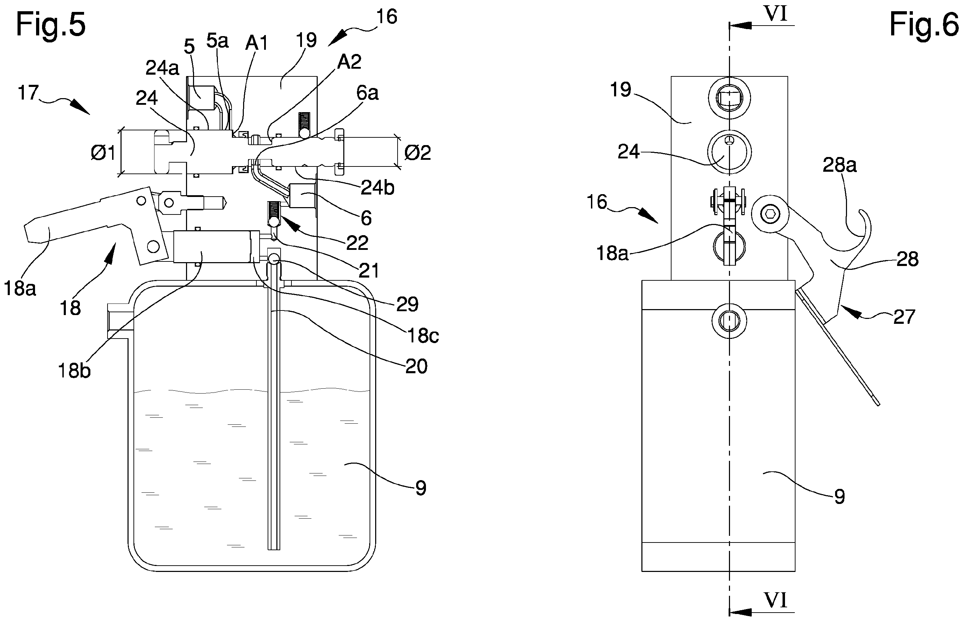

Figure 5 is a side elevation view of the device shown in Figure 3 with the spool in the movement position;
Figure 6 is a section of the device of Figure 5 according to the track plane VI-VI.

With particular reference to these illustrations, reference numeral 1 globally indicates a device for controlling the braking of a trailer.

The device 1 comprises at least one control line 2, connectable to a source of a work fluid (e.g. oil) at a first pressure, one braking line 3 connectable to the service braking system 4 of the trailer and communicating with the control line 2, at least one additional line 5 connectable to a source of a work fluid at a second pressure, at least one emergency line 6 connectable to the additional line 5 and connectable to the emergency and/or parking brake 7 of the trailer and comprises at least one discharge line 8 of the work fluid communicating with a collection tank 9.

The device 1 then comprises first valve means (not visible in detail in the figures) operable between a braking position, wherein the additional line 5 is isolated from the discharge line 8, and an emergency position, wherein the additional line 5 is communicating with the discharge line 8. In the braking position, therefore, the work fluid present in the additional line 5 can be sent to the emergency and/or parking brake 7 by means of the emergency line 6, while in the emergency position the work fluid present along the additional line 5 is discharged into the collection tank 9. (Here, by the term "first valve means" are meant those contained in the joint 15 and which allow the line 5 to be connected to the line 8 as a result of the detachment of the female joints from the male joints).

More specifically, the emergency and/or parking brake 7 comprises an actuating rod 10 and a control cylinder 11, the piston 11a of which is mechanically connected to the rod itself and is movable between a braking position and a release position, where inside the cylinder 11 elastic means 12 are housed which are adapted to push the piston 11a towards the braking position. Inside the cylinder 11 is defined a chamber 11b, which counteracts the elastic means 12, which is fed by the fluid along the emergency line 6.

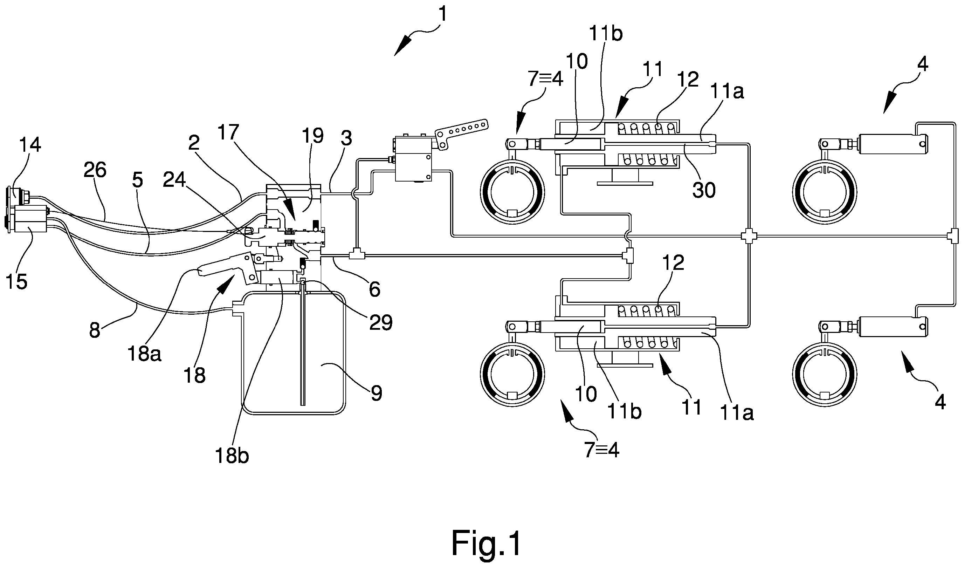

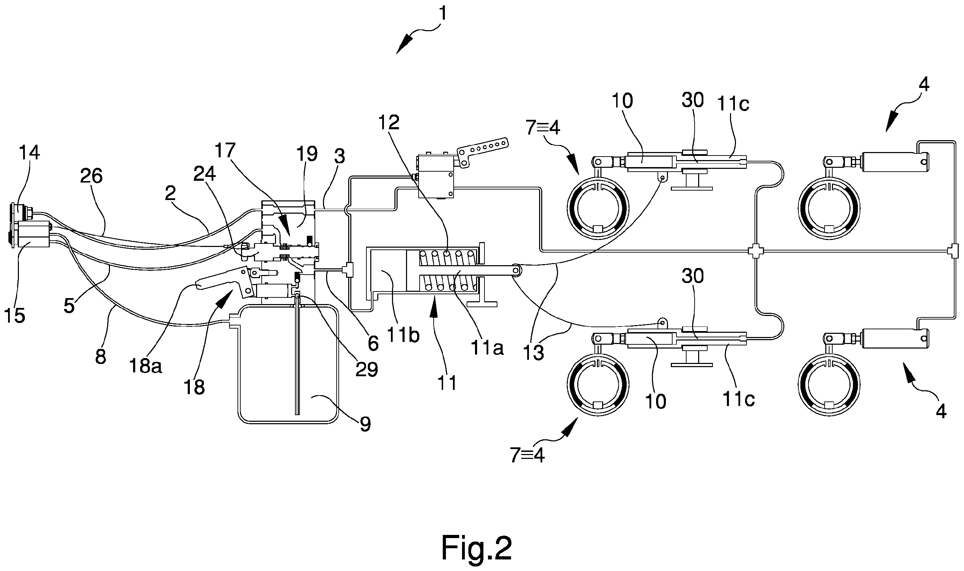

The embodiments shown in Figures 1 and 2 differ in the manner in which the emergency and/or parking brake 7 is implemented. Appropriately, the emergency and/or parking brakes 7 also serve as service brakes 4 depending on the operating condition.

In particular, in the first embodiment of Figure 1, the piston 11a operates directly on the rod 10 as a result of the thrust exerted by the elastic means 12 and inside it, a channel 30 of the flow of the work fluid is obtained which communicates with the braking line 3 and operates on the rod 10. Under normal operating conditions, i.e. with the female joints 14, 15 connected to the relative male joints, the pressurized fluid present along the control line 2 operates on the rod 10 adjusting the service braking of the trailer and, at the same time, the pressurized fluid coming from the additional line 5 enters the chamber 11b so as to compress the elastic means 12 (from which it follows that the piston 11a does not exert any force on the rod 10). In this operating condition, the brake in question serves as service brake 4.

The instant when the female joints 14, 15 detach from their male joints, the pressure along the control lines 2 and braking lines 3 is reset to zero and, at the same time, the work fluid contained in the chamber 11b is discharged into the collection tank 9. It follows, therefore, that the elastic means 12 push the piston 11a towards the rod 10, causing the displacement thereof. In this operating condition, the brake in question serves as emergency and/or parking brake 7.

In the second embodiment of Figure 2, the piston 11a is mechanically connected to the rod 10 by means of a relevant cable 13. More in detail, the cable 13 is associated with one containment element 11c of the rod 10, inside which there is a channel 30 communicating with the braking line 3 and acting on the rod itself. Also in this case, the rod 10 can be moved due to the effect of the pressure along the braking line 3, thus serving as service brake 4, or due to the effect of the displacement of the containment element 11c due to the pulling force exerted by the cable 13 thereon as a result of the displacement of the piston 11a following the emptying of the chamber 11b and the action of the elastic means 12. The containment element 11c therefore acts in an alternative way on the rod 10 at the pressure exerted by the work fluid present along the braking line 3, thus avoiding the sum of the effects.

In the preferred embodiments shown in the figures, the device 1 comprises a first female joint 14, which is communicating with the control line 2 and is connectable to a first male joint (not shown in the figures) associated with the towing vehicle, and a second female joint 15 communicating with the additional line 5 and with the discharge line 8 and comprising the first valve means, where the second female joint 15 can be connected to a second male joint (not shown in the figures) associated with the towing vehicle.

According to the invention, the device 1 comprises at least second valve means 17 positioned between the additional line 5 and the emergency line 6 and operable between a braking position, wherein they connect the emergency line 6 to the additional line 5, and a movement position, wherein they isolate the emergency line 6 from the additional line 5.

Advantageously, the device 1 also comprises pumping means 18 connected to the collection tank 9 and operable to send the work fluid from the collection tank itself along the emergency line 6 with the second valve means 17 in the movement position.

The pumping means 18 are preferably of the manual type.

More in detail, the device 1 comprises at least one basic body 19 supporting the second valve means 17 and the pumping means 18.

As shown in the figures, the collection tank 9 is directly associated with the basic body 19.

Preferably, between the pumping means 18 and the emergency line 6, are positioned one-way third valve means 22 adapted to prevent the return flow of the work fluid from the emergency line 6 to the collection tank 9.

In addition, between the pumping means 18 and the collection tank 9 are positioned fourth valve means 29 adapted to prevent the return flow of the fluid to the collection tank itself.

More specifically, the pumping means 18 comprise at least one lever 18a which can be operated manually by an operator and is adapted to move a small cylinder 18b inserted smoothly and tightly into a seat 18c obtained in the basic body 19 and communicating, through a taking channel 20 along which the fourth valve means 29 are arranged, with the collection tank 9. The seat 18c is then communicating, through a sending channel 21, with the emergency line 6, where along the sending channel 21 the third valve means 22 are arranged. Advantageously, the second valve means 17 comprise at least one seat 23, defined on the basic body 19, communicating with the additional line 5 and the emergency line 6, both of which have at least one defined section inside the basic body itself, and comprise at least one spool 24 housed in a sliding manner inside the seat 23. The spool 24 is adapted to place the additional line 5 in communication with the emergency line 6 in the braking position, so that the pressurized fluid can be supplied by the towing vehicle in the chamber 11b through the second female joint 15 or can be discharged from the chamber 11b into the collection tank 9, and to isolate the additional line 5 from the emergency line 6 in the movement position, so that the work fluid taken from the collection tank 9 by means of the pumping means 18 can be sent to the emergency and/or parking brake 7 by means of the emergency line 6. Preferably, the spool 24 has at least a first section 24a having a first thrust area A1 and a second section 24b having a second thrust area A2, where the diameter of the first thrust area A1, identified in the figures with φ₁, is larger than the diameter of the second thrust area A2, identified in the figures with φ₂.

With the spool 24 in the movement position, the first thrust area A1 is communicating with the additional line 5, while the second thrust area A2 is communicating with the additional line 5 and with the emergency line 6. This means that when the additional line 5 is under pressure, due to the connection to the towing vehicle, the spool 24 moves autonomously to the braking position due to the greater thrust area on which the pressurized fluid operates. In particular, with the spool 24 in the movement position, the emergency line 6 is only communicating with the diameter φ₂ (and therefore with the second thrust area A2) and therefore does not generate forces on the spool 24, while the additional line 5 communicates on the one hand with the first diameter φ₁ (and therefore with the first thrust area A1) and on the other hand with the second diameter φ₂ (and therefore with the second thrust area A2).

Appropriately, the additional line 5 and the emergency line 6 face the seat 23 by means of an additional port 5a and an emergency port 6a, respectively, where sealing means 25 are positioned between them. In other words, the sealing means 25 are positioned between the first section 24a and the second section 24b with the spool 24 in movement position.

The first section 24a protrudes outside the basic body 19 when the spool 24 is in the braking position, while it is completely contained inside the basic body itself when the spool 24 is in the movement position.

Advantageously, the device 1 comprises mechanical connecting means 26 of the second female joint 15 to the spool 24, which are adapted to move the spool itself towards the braking position as a result of the detachment of the female joints 14, 15 from the relative male joints. In particular, the connecting means 26 first bring the spool 24 to the braking position and, subsequently, release the female joints 14, 15 from the relative male joints.

The connecting means 26 are, e.g., of the type of an inextensible cable. Preferably, the device 1 comprises signaling means 27 for signaling the position of the second valve means 17.

In the preferred embodiments shown in the figures, the signaling means 27 comprise at least one signaling element 28 associated in a movable manner with the basic body 19 and adapted to operate in conjunction with the spool 24. More specifically, the signaling element 28 is movable between a first work position, wherein it engages with the spool 24, when the latter is in the braking position, and a second work position, wherein it is disengaged from the spool 24 when the latter is in the movement position. The signaling element 28 is adapted to move from the first work position to the second work position as a result of the displacement of the spool 24 from the braking position to the movement position.

The signaling element 28 comprises a fastening element 28a which engages with the first section 24a of the spool 24 when the latter is in the braking position, while when the spool 24 moves to the movement position, as a result of the entry of the first section 24a into the basic body 19 the fastening element 28a disengages from the first section itself.

The signaling element 28 is preferably hinged to the basic body 19 and, as a result of the displacement of the spool 24 from the braking position to the movement position, it moves from the first work position to the second work position due to its own weight.

The operation of the device according to the invention is as follows.

During towing operations, i.e. when the female joints 14, 15 are connected to the relevant male joints associated with the towing vehicle, the control line 2 sends the work fluid coming from the braking system of the towing vehicle to the braking line 3, so as to activate the service braking system 4 of the trailer, and the additional line 5 sends the work fluid to the emergency line 6 so as to keep the emergency and/or parking brake 7 deactivated by means of the compression of the relevant elastic means 12. In this operating condition, the first valve means are in the braking position, so the additional line 5 is isolated from the discharge line 8 and, therefore, from the collection tank 9.

When the female joints 14, 15 are disconnected from the relevant male joints, the additional line 5 is placed in communication with the discharge line 8 by the first valve means, which move from the braking position to the emergency position.

As a result of the connection of the additional line 5 to the discharge line 8, the work fluid present inside the chamber 11b of the emergency and/or parking brake 7, which keeps the relevant elastic means 12 compressed, is discharged inside the collection tank 9 allowing the emergency and/or parking brake 7 to activate.

In these operating conditions, the second valve means 17, and more particularly the spool 24, are kept in the braking position and the signaling element 28 is in the first work position.

When the trailer needs to be moved, the spool 24 is manually moved to the movement position, thus interrupting the connection between the additional line 5 and the emergency line 6. In this operating configuration, the operator can then operate the pumping means 18 by sending the work fluid contained in the collection tank 9 along the emergency line 6 and, through it, inside the emergency and/or parking brake 7 so as to deactivate it by compressing the relevant elastic means 12.

As a result of the movement of the spool 24 to the movement position, the signaling element 28 moves to the second work position due to its own weight, thus indicating that the emergency and/or parking brake 7 is deactivated.

In the event that, as a result of the connection of the female joints 14, 15 with the relevant male joints, the additional line 5 returns to the second work position so that, even if the operator forgets returning the spool 24 to the braking position, as a result of the different thrust area on which operate the work fluid present in the additional line 5 and the fluid present along the emergency line 6, the spool 24 moves autonomously to the braking position, thus connecting the additional line 5 to the emergency line 6. As a result of the connection of the female joints 14, 15 to the male joints, the first valve means are automatically brought back to the braking position and the additional line 5 is isolated from the discharge line 8.

The operator then manually returns the signaling element 28 to the first work position.

In the event of the towing vehicle being of the old generation type, i.e. provided with a single male joint adapted to connect to the first female joint 14 and, therefore, to the control line 2, once this connection has been made, the spool 24 is manually moved to the movement position and the work fluid is sent from the collection tank 9 to the emergency line 6 by means of the pumping means 18. This deactivates the emergency and/or parking brake 7 and allows the trailer to be towed.

In the event of the towing vehicle being detached from the trailer, the cable 13 exerts a pulling force on the spool 24 and returns it to the braking position, so as to place the emergency line 6 in communication with the additional line 5 and so as to allow the work fluid which kept the elastic means 12 compressed to flow into the collection tank 9 thus causing the activation of the emergency and/or parking brake 7.

It has in practice been found that the described invention achieves the intended objects and, in particular, it is underlined that the device to which the present invention relates allows, thanks to the presence of the second valve means and of the pumping means, moving the trailer, by deactivating the corresponding emergency and/or parking brake even when the trailer itself is detached from the relevant towing vehicle.

The device for controlling the braking according to the present invention also allows avoiding that the emergency and/or parking brake can remain deactivated even after being connected to the towing vehicle, thanks to the fact that the spool has sections with different diameters.

Furthermore, the device which the present invention relates to makes it possible to promptly inform the user if the second valve means are in the braking or movement position, thus informing about the operating conditions in good time. Last but not least, the device for controlling the braking according to the invention allows the correct towing of the trailer even with a single-line old generation towing vehicle.

## Claims

1. Device (1) for controlling the braking of a trailer, comprising:
- at least one control line (2) connectable to a source of a work fluid at a first pressure;
- a braking line (3) connectable to a service braking system (4) of the trailer and communicating with said control line (2);
- at least one additional line (5) connectable to a source of a work fluid at a second pressure;
- at least one emergency line (6) connectable to said additional line (5) and connectable to an emergency and/or parking brake (7) of the trailer of the type of a hydraulically released spring brake;
- at least one discharge line (8) of the work fluid communicating with a collection tank (9);
- first valve means operable between a braking position, wherein said additional line (5) is isolated from said discharge line (8), and an emergency position, wherein said additional line (5) is communicating with said discharge line (8);
**characterized by** the fact that it comprises at least second valve means (17) positioned between said additional line (5) and said emergency line (6) and operable between a braking position, wherein said emergency line (6) is communicating with said additional line (5), and a movement position, wherein said emergency line (6) is isolated from said additional line (5).

2. Device (1) according to claim 1, **characterized by** the fact that it comprises pumping means (18) connected to said collection tank (9) and operable to send the work fluid from the collection tank itself along said emergency line (6) with said second valve means (17) in movement position.

3. Device (1) according to claim 2, **characterized by** the fact that said pumping means (18) are of the manual type.

4. Device (1) according to claim 2 or 3, **characterized by** the fact that between said tank (9) and said emergency line (6) are positioned one-way third and fourth valve means (22, 29) which are adapted to prevent the flow of the work fluid from said emergency line (6) towards said pumping means (18) and from said pumping means (18) towards said collection tank (9), respectively.

5. Device (1) according to one or more of claims from 2 to 4, **characterized by** the fact that it comprises at least one basic body (19) supporting said second valve means (17) and said pumping means (18).

6. Device (1) according to claim 5, **characterized by** the fact that said collection tank (9) is associated with said basic body (19).

7. Device (1) according to claim 5 or 6, **characterized by** the fact that said second valve means (17) comprise at least one seat (23), defined on said basic body (19), communicating with said additional line (5) and with said emergency line (6) and by the fact that it comprises at least one spool (24) housed in a sliding manner inside said seat (23), where said spool (24) is adapted to place said additional line (5) in communication with said emergency line (6) in said braking position and to isolate said additional line (5) from said emergency line (6) in said movement position.

8. Device (1) according to claim 7, **characterized by** the fact that said spool (24) has at least a first section (24a) having a first thrust area (A1) communicating with said additional line (5) in said movement position and at least a second section (24b) having a second thrust area (A2) communicating with said additional line (5) and with said emergency line (6) in said movement position, said first thrust area (A1) having a larger diameter than said second thrust area (A2) and said spool (24) moving towards said braking position due to the presence of the work fluid under pressure along said additional line (5).

9. Device (1) according to claim 7 or 8, **characterized by** the fact that it comprises at least a first female joint (14) communicating with said control line (2) and at least a second female joint (15) communicating with said additional line (5) and with said discharge line (8) and comprising said first valve means, where said first and second female joints (14, 15) are connectable to a first and to a second male joint respectively, which are associated with a towing vehicle, and **characterized by** the fact that it comprises mechanical connecting means (26) of said second female joint (15) to said spool (24), where said mechanical connecting means (26) are adapted to move said spool (24) towards said braking position following the detachment of said female joints (14, 15) from said male joints.

10. Device (1) according to one or more of the preceding claims, **characterized by** the fact that it comprises signaling means (27) for signaling the position of said second valve means (17).

11. Device (1) according to claim 10, **characterized by** the fact that said signaling means (27) comprise at least one signaling element (28) associated in a movable manner with said basic body (19) and adapted to operate in conjunction with said spool (24), said signaling element (28) being movable between a first work position, wherein it is engaged with said spool (24), the latter being in braking position, and a second work position, wherein it is disengaged from said spool (24) when the latter is in movement position.

12. Device (1) according to claim 11, **characterized by** the fact that said signaling element (28) is hinged to said basic body (19) and by the fact that, following the displacement of said spool (24) from the braking position to the movement position, it moves from the first to the second work position due to its own weight.

## Patentansprüche

1. Vorrichtung (1) zur Steuerung der Bremsung eines Anhängers, umfassend:
- mindestens eine Steuerleitung (2), die mit einer Quelle für ein Arbeitsfluid mit einem ersten Druck verbindbar ist;
- eine Bremsleitung (3), die an eine Betriebsbremsanlage (4) des Anhängers anschließbar ist und mit der Steuerleitung (2) in Verbindung steht;
- mindestens eine zusätzliche Leitung (5), die mit einer Quelle für ein Arbeitsfluid mit einem zweiten Druck verbindbar ist;
- mindestens eine Notleitung (6), die an die zusätzliche Leitung (5) anschließbar ist und an eine Not- und/oder Feststellbremse (7) des Anhängers vom Typ einer hydraulisch gelösten Federdruckbremse anschließbar ist;
- mindestens eine Abflussleitung (8) der Arbeitsflüssigkeit, die mit einem Sammelbehälter (9) in Verbindung steht;
- erste Ventilmittel, betätigbar zwischen einer Bremsposition, in der die zusätzliche Leitung (5) von der Abflussleitung (8) isoliert ist, und einer Notfallposition, in der die zusätzliche Leitung (5) mit der Abflussleitung (8) in Verbindung steht;
**dadurch gekennzeichnet, dass** sie mindestens zweite Ventilmittel (17) umfasst, die zwischen der zusätzlichen Leitung (5) und der Notleitung (6) angeordnet sind und betätigbar sind zwischen einer Bremsposition, in der die Notleitung (6) mit der zusätzlichen Leitung (5) in Verbindung steht, und einer Bewegungsposition, in der die Notleitung (6) von der zusätzlichen Leitung (5) getrennt ist.

2. Vorrichtung (1) nach Anspruch 1, **dadurch gekennzeichnet, dass** sie Pumpmittel (18) umfasst, die mit dem Sammelbehälter (9) verbunden ist und betreibbar ist, um das Arbeitsfluid aus dem Sammelbehälter selbst entlang der Notleitung (6) zu schicken, wobei sich die zweiten Ventilmittel (17) in Bewegungsposition befindet.

3. Vorrichtung (1) nach Anspruch 2, **dadurch gekennzeichnet, dass** die Pumpmittel (18) von der manuellen Art sind.

4. Vorrichtung (1) nach Anspruch 2 oder 3, **dadurch gekennzeichnet, dass** zwischen dem Tank (9) und der Notleitung (6) dritte und vierte Einwegventilmittel (22, 29) angeordnet sind, die geeignet sind, den Fluss des Arbeitsfluids von der Notleitung (6) zu den Pumpmitteln (18) bzw. von den Pumpmitteln (18) zu dem Sammeltank (9) zu verhindern.

5. Vorrichtung (1) nach einem oder mehreren der Ansprüche 2 bis 4, **dadurch gekennzeichnet, dass** sie mindestens einen Grundkörper (19) umfasst, der die zweiten Ventilmittel (17) und die Pumpmittel (18) stützt.

6. Vorrichtung (1) nach Anspruch 5, **dadurch gekennzeichnet, dass** der Sammelbehälter (9) mit dem Grundkörper (19) verbunden ist.

7. Vorrichtung (1) nach Anspruch 5 oder 6, **dadurch gekennzeichnet, dass** die zweiten Ventilmittel (17) mindestens einen Sitz (23) umfassen, der auf dem Grundkörper (19) definiert ist und mit der zusätzlichen Leitung (5) und mit der Notleitung (6) in Verbindung steht, und dass sie mindestens eine Spule (24) umfassen, die gleitend in dem Sitz (23) untergebracht ist, wobei die Spule (24) geeignet ist, die zusätzliche Leitung (5) mit der Notleitung (6) in der Bremsposition in Verbindung zu bringen und die zusätzliche Leitung (5) von der Notleitung (6) in der Bewegungsposition zu isolieren.

8. Vorrichtung (1) nach Anspruch 7, **dadurch gekennzeichnet, dass** die Spule (24) mindestens einen ersten Abschnitt (24a) mit einem ersten Schubbereich (A1) aufweist, der in der Bewegungsposition mit der zusätzlichen Leitung (5) in Verbindung steht, und mindestens einen zweiten Abschnitt (24b) mit einem zweiten Schubbereich (A2), der in der Bewegungsposition mit der zusätzlichen Leitung (5) und mit der Notleitung (6) in Verbindung steht, wobei der erste Schubbereich (A1) einen größeren Durchmesser als der zweite Schubbereich (A2) aufweist und die Spule (24) sich aufgrund des Vorhandenseins des unter Druck stehenden Arbeitsfluids entlang der zusätzlichen Leitung (5) in Richtung der Bremsposition bewegt.

9. Vorrichtung (1) nach Anspruch 7 oder 8, **dadurch gekennzeichnet, dass** sie mindestens ein erstes weibliches Verbindungsstück (14), das mit der Steuerleitung (2) in Verbindung steht, und mindestens ein zweites weibliches Verbindungsstück (15), das mit der zusätzlichen Leitung (5) und mit der Abflussleitung (8) in Verbindung steht, umfasst und die ersten Ventilmittel umfasst, wobei das erste und das zweite weibliche Verbindungsstück (14, 15) mit einem ersten beziehungsweise mit einem zweiten männlichen Verbindungsstück verbindbar sind, die mit einem Zugfahrzeug verbunden sind, und **dadurch gekennzeichnet, dass** sie mechanische Verbindungsmittel (26) des zweiten weiblichen Verbindungsstücks (15) mit der Spule (24) umfasst, wobei die mechanischen Verbindungsmittel (26) geeignet sind, die Spule (24) nach dem Lösen des weiblichen Verbindungsstücks (14, 15) von den männlichen Verbindungsstücken in Richtung der Bremsposition zu bewegen.

10. Vorrichtung (1) nach einem oder mehreren der vorhergehenden Ansprüche, **dadurch gekennzeichnet, dass** sie Signalisierungsmittel (27) zum Signalisieren der Position der zweiten Ventilmittel (17) umfasst.

11. Vorrichtung (1) nach Anspruch 10, **dadurch gekennzeichnet, dass** die Signalisierungsmittel (27) mindestens ein Signalelement (28) umfassen, das beweglich mit dem Grundkörper (19) verbunden ist und in der Lage ist, in Verbindung mit der Spule (24) zu arbeiten, wobei das Signalelement (28) zwischen einer ersten Arbeitsposition, in der es mit der Spule (24) in Eingriff steht, wobei sich letztere in der Bremsposition befindet, und einer zweiten Arbeitsposition, in der es von der Spule (24) gelöst ist, wenn sich letztere in der Bewegungsposition befindet, beweglich ist.

12. Vorrichtung (1) nach Anspruch 11, **dadurch gekennzeichnet, dass** das Signalelement (28) gelenkig mit dem Grundkörper (19) verbunden ist und dass sich die Spule (24) nach der Verschiebung aus der Bremsstellung in die Bewegungsstellung durch sein Eigengewicht von der ersten in die zweite Arbeitsstellung bewegt.

## Revendications

1. Dispositif (1) pour commander le freinage d'une remorque, comprenant :
- au moins une ligne de commande (2) pouvant être connectée à une source d'un fluide de travail à une première pression ;
- une ligne de freinage (3) pouvant être connectée à un système de freinage de service (4) de la remorque et communiquant avec ladite ligne de commande (2) ;
- au moins une ligne supplémentaire (5) pouvant être connectée à une source d'un fluide de travail à une deuxième pression ;
- au moins une ligne de secours (6) pouvant être connectée à ladite ligne supplémentaire (5) et pouvant être connectée à un frein de secours et/ou à main (7) de la remorque du type d'un frein à ressort à libération hydraulique ;
- au moins une ligne de décharge (8) du fluide de travail communiquant avec un réservoir de collecte (9) ;
- un premier moyen formant clapet pouvant fonctionner entre une position de freinage, dans laquelle ladite ligne supplémentaire (5) est isolée de ladite ligne de décharge (8), et une position de secours, dans laquelle ladite ligne supplémentaire (5) communique avec ladite ligne de décharge (8) ;
**caractérisé en ce qu'**il comprend au moins un deuxième moyen formant clapet (17) positionné entre ladite ligne supplémentaire (5) et ladite ligne de secours (6) et pouvant fonctionner entre une position de freinage, dans laquelle ladite ligne de secours (6) communique avec ladite ligne supplémentaire (5), et une position de mouvement, dans laquelle ladite ligne de secours (6) est isolée de ladite ligne supplémentaire (5).

2. Dispositif (1) selon la revendication 1, **caractérisé en ce qu'**il comprend un moyen de pompage (18) connecté audit réservoir de collecte (9) et pouvant fonctionner pour envoyer le fluide de travail depuis le réservoir de collecte lui-même le long de ladite ligne de secours (6) avec ledit deuxième moyen formant clapet (17) en position de mouvement.

3. Dispositif (1) selon la revendication 2, **caractérisé en ce que** ledit moyen de pompage (18) est du type manuel.

4. Dispositif (1) selon la revendication 2 ou 3, **caractérisé en ce qu'**entre ledit réservoir (9) et ladite ligne de secours (6) sont positionnés des premier et quatrième moyens formant clapet unidirectionnels (22, 29) qui sont adaptés pour empêcher l'écoulement du fluide de travail depuis ladite ligne de secours (6) vers ledit moyen de pompage (18) et depuis ledit moyen de pompage (18) vers ledit réservoir de collecte (9), respectivement.

5. Dispositif (1) selon une ou plusieurs des revendications 2 à 4, **caractérisé en ce qu'**il comprend au moins un corps basique (19) supportant ledit deuxième moyen formant clapet (17) et ledit moyen de pompage (18).

6. Dispositif (1) selon la revendication 5, **caractérisé en ce que** ledit réservoir de collecte (9) est associé audit corps basique (19).

7. Dispositif (1) selon la revendication 5 ou 6, **caractérisé en ce que** ledit deuxième moyen formant clapet (17) comprend au moins un siège (23), défini sur ledit corps basique (19), communiquant avec ladite ligne supplémentaire (5) et avec ladite ligne de secours (6) et **en ce qu'**il comprend au moins un tiroir (24) logé d'une manière coulissante à l'intérieur dudit siège (23), où ladite bobine (24) est adaptée pour placer ladite ligne supplémentaire (5) en communication avec ladite ligne de secours (6) dans ladite position de freinage et pour isoler ladite ligne supplémentaire (5) de ladite ligne de secours (6) dans ladite position de mouvement.

8. Dispositif (1) selon la revendication 7, **caractérisé en ce que** ledit tiroir (24) comporte au moins une première section (24a) présentant une première zone de poussée (A1) communiquant avec ladite ligne supplémentaire (5) dans ladite position de mouvement et au moins une deuxième section (24b) présentant une deuxième zone de poussée (A2) communiquant avec ladite ligne supplémentaire (5) et avec ladite ligne de secours (6) dans ladite position de mouvement, ladite première zone de poussée (A1) présentant un diamètre plus grand que celui de ladite deuxième zone de poussée (A2) et ledit tiroir (24) se déplaçant vers ladite position de freinage en raison de la présence du fluide de travail sous pression le long de ladite ligne supplémentaire (5).

9. Dispositif (1) selon la revendication 7 ou 8, **caractérisé en ce qu'**il comprend au moins un premier raccord femelle (14) communiquant avec ladite ligne de commande (2) et au moins un deuxième raccord femelle (15) communiquant avec ladite ligne supplémentaire (5) et avec ladite ligne de décharge (8) et comprenant ledit premier moyen formant clapet, où lesdits premier et deuxième raccords femelles (14, 15) peuvent être connectés à un premier et à un deuxième raccord mâle respectivement, qui sont associés à un véhicule de traction, et **caractérisé en ce qu'**il comprend un moyen de connexion mécanique (26) dudit deuxième raccord femelle (15) audit tiroir (24), où ledit moyen de connexion mécanique (26) est adapté pour déplacer ledit tiroir (24) vers ladite position de freinage à la suite du détachement desdits raccords femelles (14, 15) vis-à-vis desdits raccords mâles.

10. Dispositif (1) selon une ou plusieurs des revendications précédentes, **caractérisé en ce qu'**il comprend un moyen de signalisation (27) pour signaler la position dudit deuxième moyen formant clapet (17).

11. Dispositif (1) selon la revendication 10, **caractérisé en ce que** ledit moyen de signalisation (27) comprend au moins un élément de signalisation (28) associé d'une manière mobile audit corps basique (19) et adapté pour fonctionner conjointement avec ledit tiroir (24), ledit élément de signalisation (28) étant mobile entre une première position de travail, dans laquelle il est en prise avec ledit tiroir (24), ce dernier étant en position de freinage, et une deuxième position de travail, dans laquelle il est désolidarisé dudit tiroir (24) lorsque ce dernier est en position de mouvement.

12. Dispositif (1) selon la revendication 11, **caractérisé en ce que** ledit élément de signalisation (28) s'articule sur ledit corps basique (19) et **en ce que**, à la suite du déplacement dudit tiroir (24) de la position de freinage vers la position de mouvement, il se déplace de la première à la deuxième position de travail en raison de son propre poids.
